# EUROPEAN PATENT SPECIFICATION

(11) **EP 1 633 472 B1**
(45) Date of publication and mention of the grant of the patent: **13.08.2008**
(21) Application number: 04748644.4
(22) Date of filing: 10.06.2004
(51) Int. Cl.: B01J 13/06, B01J 13/20

(54) **ENCAPSULATED MATERIALS**
VERKAPSELTE MATERIALIEN
MATIERES ENCAPSULEES

(30) Priority: 13.06.2003 EP 03076842
(43) Date of publication of application: 15.03.2006
(73) Proprietor: DSM IP Assets B.V., 6411 TE Heerlen (NL)
(72) Inventor: VAN BENTHEM, Rudolfus, Antonius, Theodorus, Maria, NL-6141 BR Limbricht (NL)
(74) Representative: Grossner, Lutz
(86) International application number: PCT/NL2004/000412
(87) International publication number: WO 2004/110614

(56) References cited:
- US-A- 4 827 003
- US-A- 5 225 278

## Description

The invention relates to a process for forming capsules. An encapsulation process generally comprises the following steps:
(a) forming a dispersion of a core material in a continuous phase containing a wall forming material;
(b) depositing the wall material upon the surface of a core material to form capsules;
(c) hardening of the capsules; and
(d) recovering the capsules.

The continuous phase in step (a) is normally a solution of the wall material. If the core is a liquid, it is dispersed or emulsified in said solution; if, however, the core is a solid, it is usually pre-ground to the desired size and then dispersed within the solution. Step (b) generally involves changing the conditions of the solution in such a way as to cause phase separation of the wall material from the continuous phase. Normally, the wall material is caused to phase separate from the continuous phase, whereby at least part of the wall material forms a coherent film around the particles or droplets of the core phase. This liquid, amorphous or gelatinous wall phase is subsequently hardened (step (c)), before recovery of the capsules. Capsule recovery is effected by filtering, centrifuging and the like, optionally followed by drying in case the capsules are to be recovered as a dry powder. As is known to the skilled person, capsules can have a variety of shapes, depending a.o. on the shape of the core material and on the regularity of the wall material. As long as a minimum wall material thickness is present such that the core material is sufficiently encapsulated, it is usually not necessary that wall material thickness is perfectly uniform throughout a capsule. It is also possible that a capsule is in fact a regularly or irregularly shaped agglomerate of several smaller whole or partial capsules. In some instances, the dried product is a caked powder and must be reduced to a free flowing powder by a gentle grinding operation, e.g., sieving.

A well-known and often used wall forming material is melamine-formaldehyde resin. The thus formed melamine-formaldehyde capsules are e.g. used to encapsulate aromatizing and flavoring agents and vitamins.

An important drawback of melamine-formaldehyde as wall forming material is that a slight formaldehyde emission is still observed. During the production of the resin and the encapsulated product, but also from the capsule itself, vapours are released that may be irritating and even toxic. Residues of the original raw materials always remain behind, also after polymerisation. In cured condition, formaldehyde slowly diffuses from the product. This formaldehyde emission is not desirable, definitely not in a confined area. In such areas formaldehyde is inhaled and contacts the eyes, mouth and other parts of the body. Formaldehyde gas causes irritation of the eyes and respiratory tract and is toxic. Moreover, when the capsules are further degraded, e.g. by hydrolysis, after use or during de-encapsulation, an even larger portion of the original formaldehyde content of the original wall material, potentially even all of it, is released to the direct environment of the capsule. A disadvantage of the capsules based on melamine-formaldehyde capsules therefore is the formation of the injurious formaldehyde.

An aim of the present invention is to provide a process for forming capsules, which do not release free formaldehyde. This aim is achieved in a process for forming capsules comprising the steps of:
(1) forming a solution of an amino compound (I) in a solvent;
(2) forming a dispersion of a core material in the solution;
(3) depositing the amino compound as a resin upon the surface of the core material to form capsules; and
(4) optionally hardening and/or recovering the capsules,
whereby steps (1) and (2) are executed in either order or simultaneously, and wherein amino compound (I) has the following formula 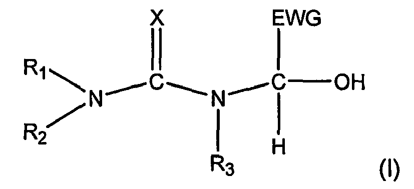 where:
- X is O or NR₅;
- EWG is an electron-withdrawing group;
- R₁, R₂, R₃, R₅ are equal to an H, alkyl, cycloalkyl, aryl of heterocyclic group; and
- R₁, R₂, and R₅ or R₁, R₂, and R₃ may together form a heterocyclic group.

Electron-withdrawing groups (EWG) are as such known to the skilled person. Examples of EWG are acid-, ester-, cyano-, di-alkylacetal-, aldehyde-, substituted phenyl-, or trihalomethyl groups. Hydrogen is not an EWG.

An amino compound is defined herein as a compound having at least one NH or NH₂ group, attached to an electron-attracting atom or to an atom that is connected to electron-attracting atom or group. The number of amino groups per amino compound generally is at most 3. Examples of electron-attracting atoms are oxygen, nitrogen and sulphur. Suitable amino compounds are for example triazines, guanidine, urea, and mixtures of these compounds. Aminoplasts such as melamine-formaldehyde, urea-formaldehyde and melamine-urea-formaldehyde may also be employed as amino compound. Preferably, urea or triazines such as melamine, melam, melem, ammeline, ammelide and ureidomelamine are used. In particular melamine is used.

Steps (1) and (2) can be carried out in the reversed sequence or in parallel, such that the solution and the dispersion both in the solvent are mixed together. Thus, the description of step (2) as given above should be interpreted to encompass the meaning that a dispersion of the core material is formed in the solvent rather than in the solution, this being the case if step (2) is carried out prior to or simultaneously with step (1).

The first step in the process of the invention is forming a solution of a compound according to formula (I). A compound according to formula (I) is preferably prepared by reacting an amino compound with an aldehyde according to formula (II) or with an aldehyde derivative. An aldehyde derivate herein means an aldehyde hydrate according to formula (III) or an alkanol hemiacetal according to formula (IV):

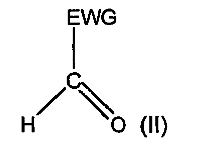

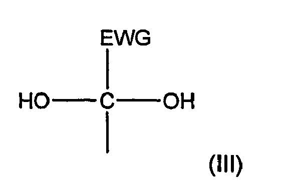

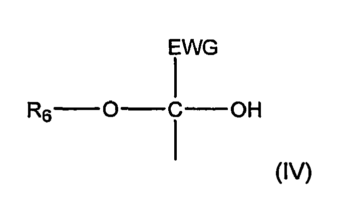

Examples of aldehydes according to formula (II) are glyoxilic acid, dimethoxyacetaldehyde, diethoxyacetaldehyde, ethylglyoxylate, butylglyoxylate, and o-phtalaldehyde. Examples of aldehyde hydrates according to formula (III) are glyoxylic acid hydrate, chloral hydrate, and glyoxal hydrate. In formula (IV), R₆ stands for a C₁-C₁₂ alkyl group, aryl group, aralkyl group or a cycloalkyl group. Examples of alkanol hemiacetals accoding to formula (IV) are methylglyoxylate methanol hemiacetal and ethylglyoxylate ethanol hemiacetal.

The process for the preparation of the compound according to formula (I) will usually occur spontaneously once the amino compound and the compound according to formula (II), (III) or (IV) have been brought into contact with each other. The temperature in the present process can thus vary within wide limits, and preferably lies between 10°C and 90°C. Most preferably the process is carried out at between 40°C and 80°C. The process for preparing the amino compound according to formula (I) follows the general rule that it proceeds more quickly if the temperature is raised. An additional control mechanism to influence the reaction rate is the pH, because the addition of either an acid or a base has a catalytic effect. The pH may be adjusted to a value lying preferably between 2 and 10. Thus, the skilled person can easily - by adjusting temperature and pH - find the circumstances under which a desirable reaction rate is achieved.

The pressure in the present process preferably is between 0.005 MPa and 1.0 MPa, preferably between 0.02 MPa and 0.1 MPa. The process is preferably carried out in a solvent such as for example water or a mixture of water and alkanol. Water is the preferred solvent. Examples of alkanols are methanol, ethanol, propanol, butanol, pentanol.

Starting from the fact that the number of amino groups per amino compound generally is at most 3, the molar ratio beween amino group and aldehyde or aldehyde derivative is poreferably between 3 and 1. With more than 3 amino groups per aldehyde or aldehyde derivative, the molecular weight of the resin will be limited, while a ratio below 1 is limiting for crosslinking of the resin and leaves free aldehyde or aldehyde derivative in the solvent.

In a preferred embodiment of the process according to the invention, in step (1) a solution of a compound (V) from an amino compound/alkanol hemiacetal mixture in a solvent is formed, wherein compound (V) falls within the scope of formula (I) and is an amino compound according to the following formula: 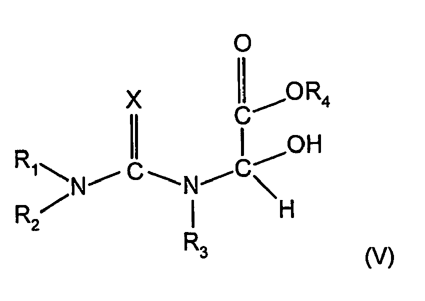 where:
- X is equal to O or NR₅;
- R₄ is equal to a C₁-C₁₂ alkyl group, aryl group, aralkyl group or cycloalkyl group;
- R₁, R₂, R₃, R₅ are equal to an H, alkyl, cycloalkyl, aryl of heterocyclic group; and
- R₁, R₂, and R₅ or R₁, R₂, and R₃ may together form a heterocyclic group.

Preferably R₄ is a C₁-C₁₂ alkyl group. Examples hereof are methyl, ethyl, propyl, butyl, pentyl, hexyl, heptyl etc. R₄ is in particular a methyl group or an ethyl group.

A compound according to formula (V) can be prepared by reacting an amino compound and an alkanol hemiacetal of the following general formula (VI): 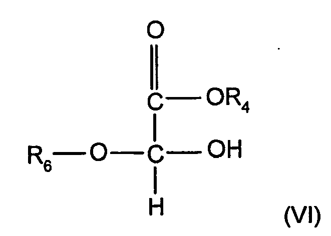 where R₄ and R₆ are a C₁-C₁₂ alkyl group, aryl group, aralkyl group or cycloalkyl group, in which process an alkanol is released.

Preferably R₄ and R₆ are C₁-C₁₂ alkyl groups. Examples hereof are methyl, ethyl, propyl, butyl, pentyl, hexyl, heptyl etc. R₄ and R₆ are in particular a methyl group or an ethyl group.

Examples of alkanol hemiacetals of formula (VI) are: methylglyoxylate methanol hemiacetal (GMHA®, DSM Fine Chemicals, Linz); ethylglyoxylate ethanol hemiacetal (GEHA®, DSM Fine Chemicals, Linz); ethylglyoxylate methanol hemiacetal; butylglyoxylate butanol hemiacetal; butylglyoxylate methanol hemiacetal; butylglyoxylate ethanol hemiacetal; isopropylglyoxylate isopropanol hemiacetal; propylglyoxylate propanol hemiacetal; cyclohexylglyoxylate methanol hemiacetal and 2-ethylhexylglyoxylate methanol hemiacetal. It is also possible to use ethyl or butyl glyoxylate in stead of the hemiacetal.

The second step in the process of the invention is forming a dispersion of a core material in the solution. If the core is a first liquid, the material to be encapsulated can be this first liquid. The core material can also be a solid or a second liquid which is dissolved or dispersed in said first liquid. Said first liquid preferably is a high boiling hydrophobic liquid such as an oil. Suitable oils, are in particular vegetable and animal oils, fatty esters and waxes, partly hydrogenated terphenyls, chlorinated paraffins, alkylated biphenyls, alkyl naphthalenes, diaryl methane derivatives, dibenzyl benzene derivatives, alkanes, cycloalkanes and esters, such as phthalates, adipates, trimellitates and phosphates, and silicone oils.

To stabilize the dispersion a surfactant can be added. Suitable surfactants can be found among ionic and non-ionic surfactants. The surfactant preferably is an anionic or non-ionic surfactant. It is not always necessary to use such a surfactant, since many of the compounds according to formula (VI) spontaneously form small amounts of anionic groups through hydrolysis which can act as a surfactant.

The third step in the process of the invention is depositing the compound as a resin upon the surface of the core material to form capsules. Step (3) generally involves changing the conditions in such a way as to cause phase separation of the wall material from the continuous wall solution phase. Normally, the wall forming material is caused to phase separate from the continuous phase, at least partially as a coherent film around the particles or droplets of the core phase in a process which preferably lasts between several minutes and hours. Phase separation can be introduced by an increase or decrease of the temperature. A decrease of temperature may cause phase separation due to a decreased solubility, while an increase of the temperature may cause the resin to pass over its cloud point.

An alternative way of phase separation is to increase the molecular weight of the resin. This is effected by prolonged polymerization of the compound according to formula (I) or (V) in the solvent. This will decrease the solubility of the resin in the solvent.

A third way to introduce phase separation is to increase or to decrease the concentration of the resin, thus using the fact that resins from compounds according to formula (I) or (V) generally have a range of maximum solubility.

Since it is the purpose of the process according to the invention to form capsules, a high percentage of the core material should be fully encapsulated in the third step; preferably, at least 80 wt.% or 85 wt.% of the core material is fully encapsulated in the third step, more preferable at least 90 wt.%, in particular at least 95 or even 99 wt.%; most preferably, essentially all core material is fully encapsulated in the third step.

The optional forth step in the process of the invention is the hardening and isolation of the capsules. In this case the liquid or gelatinous wall phase is preferably hardened, before isolation of the capsules. Hardening can be done by lowering the temperature below the T_{g} of the resin, or by polymerisation of the resin in order to obtain an elastic non-sticky capsule. In a preferred embodiment of the process according to the invention, hardening is incorporated into the third step. Capsule recovery can be effected by for example filtering or centrifuging, optionally followed by drying or spray drying in case the capsules are to be recovered as a dry powder. In some instances, the dried product is a caked powder and must be reduced to a free flowing powder by a gentle grinding operation, e.g., sieving.

The encapsulated products of the present invention also find applications due to their unique properties in the formulation of compositions for widely diversified fields of use. In the cosmetic field, products such as soap bars, fragrant in lotions and creams can be formulated containing encapsulated water soluble ingredients which would be unstable or incompatible in unencapsulated form in the presence of other ingredients of the particular formulation. For example, since certain antibacterials such as the chlorinated phenols and neomycin sulfate are incompatible on prolonged contact with soap, the present invention makes possible the formulation of a soap bar containing both of these ingredients.

In the agricultural field, encapsulated food supplements and pest control agents can be advantageously formulated. For example, water-soluble fertilizers such as ammonium nitrate, urea and superphosphate can be encapsulated for application to the soil when a slow release or extended action is desirable, e.g., where rapid release would "burn" the vegetation. For the control of pests, encapsulated insecticides can be deposited on vegetation or in the soil without harm to the vegetation; moreover, the insecticide is not dissolved and washed away by moisture or rain, thereby allowing the insecticide to remain where deposited until ingested by the insect. Antihelminthic agents such as piperazine phosphate or citrate, and methyl rosaniline chloride when encapsulated can be incorporated into feed material for domestic animals, the encapsulated antihelminthic thereby being tasteless in the feed and also protected from decomposition during storage of the feed. Rodenticides such as calcium cyanide, thallium sulfate and sodium fluoroacetate, which are unstable in the presence of moisture or have an odor or taste repellent to the rodent are advantageously encapsulated.

Vitamins, minerals, amino acids and other food supplements, when encapsulated can be incorporated in animal feeds and be protected from decomposition during storage periods from such adverse conditions as air, moisture, and incompatible ingredients in the feed composition itself. In a similar manner, food supplements can be incorporated in compositions for human use.

The way to release the core material strongly depends on the application. Generally it is aimed that the core material is released when the capsules are consumed. Examples of consumed encapsulated materials are fragrants released during ironing or in washing machines, and flavours released from food while being eaten.

The release of the core material can be caused by different mechanisms. A first mechanism is a mechanical stress. In this way ink is released from ink comprising capsules used in copy paper. An example of the release of the core material by a temperature increase is found in flavoring additives applied in soup. Another way to release the core material is by controlled hydrolisis e.g. initiated by a decrease or increase of the pH of the aqueous environment, applied in encapsulated fragrants for (dish) washing machines or enzymatic release in drugs comprising capsules. In order to control the release speed, the thickness of the encapsulating wall can be adapted to the requirements of the specific application. A simple way to control the wall thickness is by choosing the concentration of the mixture in the solvent taking into account the particle size in relation to the wall thickness. The weight ratio of the mixture and the solvent generally is between 0.05 and 0.8, whereby the precise ranges strongly depend on the solubility of the specific compound according to formula (I) or (V) used. Compounds according to formula (I) or (V) typically have a maximum solubility within the above mentioned range. The precise range for a particular compound can easily be established by a person skilled in the art.

The present invention also finds application in medical treatment of both animals and humans. Medicaments can be encapsulated by the method of the present invention to give a sustained release upon ingestion with resultant sustained therapeutic action. Coatings which will not dissolve in the stomach can be formulated to overcome the problem of gastric irritation or nausea caused by such medicaments as emetine hydrochloride, quinacrine hydrochloride and para-aminosalicylic acid. Similarly, medicaments such as penicillin and certain glandular extracts which are inactivated by the acid condition or enzymes encountered in the stomach are advantageously encapsulated.

The invention further relates to an encapsulated material comprising a core material and a wall material, wherein the wall material comprises a resin prepared from a compound according to formula (I) of claim 1. In a preferred embodiment, the compound according to formula (I) is an amino compound according to formula (V) wherein a heterocyclic aminotriazine group is formed by R₁,R₂ and R₅, and wherein R₃ is H and R₄ is methyl or ethyl. In a more preferred encapsulated material according to the invention, the aminotriazine ring is derived from melamine.

An additional advantage of the encapsulated material according to the invention is, that hydrolyses of the wall material takes place above 85°C.

The invention is further elucidated in the following non-limiting

### examples.

### Example I:

In a reaction vessel 62.9 gram melamine, 89.2 gram methyl glyoxylate and 64.8 gram water was added. This mixture was under constant stirring, heated up in a oil bad of 80°C until the melamine reacted completely with the glyoxylate and the resin is clear. Then 50 gram of paraffin oil at 80°C, in which 5 mg of a non-water soluble dye (Solvent Blue 59) is, under fierce stirring with a Ultra Turrax T25 at 24,000 rpm, carefully mixed in. To stabilize the dispersion of oil and resin a surfactant (Disperbyk-181) was added. The warm oil/resin dispersion was carefully, under stirring, added to cold water; in this fashion, hardening of the capsules was achieved through cooling. The oil/resin dispersion precipitates in the water. The precipitate was filtered out with a paper filter, leaving a colourless liquid as permeate; the light-blue powder was dried in vacuum oven at 50°C. The powder was washed with heptane to determine the amount of "free" paraffin oil. The measured weight loss was 3.6%. The washed powder, still light blue in colour, was then analysed with Differential Scanning Calorimetry and showed a glass transisition at 70°C, showing that the powder contained paraffin oil. Crushing the powder in a mortar afforded a more intense blue coloured smearing paste.

### Example II

10 mg Dye (Solvent Blue 59) was dissolved in 100 g paraffin oil. An emulsion of this dyed oil was made in water with the help of 5 g Disponyl^{®} FES 77 (sodium lauryl ether sulfate, an anionic dispersant, supplier Cognis) in an Ultraturrax mixing device operating at 800 min-1. Separately, a mixture of 10,2 g melamine, 18 g GMHA and 12 g water were heated to 80°C to give a clear resin solution after 5 minutes stirring. The dyed oil emulsion was then added to the resin solution with continous stirring, and the temperature maintained at 60 °C for 4 hours. In this fashion, hardening of the capsules was achieved by extended reaction of the wall material. The dispersion was cooled to room temperature and filtered, leaving a colourless permeate. The filtered cake was dried in air, and gently grinded to a light-blue solid powder. The powder was washed with heptane to determine the amount of "free" paraffin oil. The measured weight loss was 3%. The washed powder, still light blue in colour, was then analysed with Differential Scanning Calorimetry and showed a glass transisition at 70°C, showing that the powder contained paraffin oil. Crushing the powder in a mortar afforded a more intense blue coloured smearing paste.

### Example III

10 mg Dye (Solvent Blue 59) was dissolved in 100 g paraffin oil. An emulsion of this dyed oil was made in water with the help of 5 g p-DADMAC (poly-dimethyldiallylammoniumchloride, a cationic dispersant, Mw 50.000) in an Ultraturrax mixing device operating at 800 min-1. Separately, a mixture of 10,2 g melamine, 18 g GMHA and 12 g water were heated to 80°C to give a clear resin solution after 5 minutes stirring. The dyed oil emulsion was then added to the resin solution with continuous stirring, and the temperature maintained at 60°C for 4 hours. In this fashion, hardening of the capsules was achieved by extended reaction of the wall material. The dispersion was cooled to room temperature and filtered (leaving a colourless permeate) and the water evaporated. The filtered cake was dried in air, and gently grinded to a light-blue solid powder. The powder was washed with heptane to determine the amount of "free" paraffin oil. The measured weight loss was 3%. The washed powder, still light blue in colour, was then analysed with Differential Scanning Calorimetry and showed a glass transisition at 70°C, showing that the powder contained paraffin oil. Crushing the powder in a mortar afforded a more intense blue coloured smearing paste.

## Claims

1. Process for forming capsules comprising the steps of:
(1) forming a solution of an amino compound (I) in a solvent;
(2) forming a dispersion of a core material in the solution;
(3) depositing the amino compound as a resin upon the surface of the core material to form capsules; and
(4) optionally hardening and/or recovering the capsules,
whereby steps (1) and (2) are executed in either order or simultaneously, and wherein amino compound (I) has the following formula 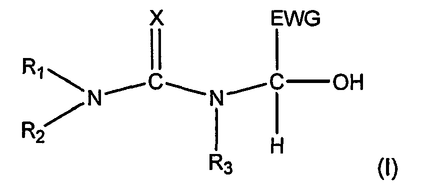 where:
- X is O or NR₅;
- EWG is an electron-withdrawing group;
- R₁, R₂, R₃, R₅ are equal to an H, alkyl, cycloalkyl, aryl of heterocyclic group; and
- R₁, R₂, and R₅ or R₁, R₂, and R₃ may together form a heterocyclic group.

2. Process according to claim 1, wherein EWG is an acid-, ester-, cyano-, di-alkylacetal-, aldehyde-, substituted phenyl-, or trihalomethyl group.

3. Process according to claim 1, wherein in step (1) a solution of a compound (V) from an amino compound/alkanol hemiacetal mixture in a solvent is formed, wherein compound (V) is an amino compound according to the following formula: 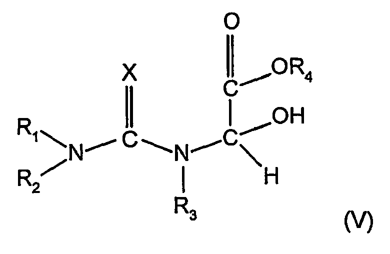 where:
- X is equal to O or NR₅;
- R₄ is equal to a C₁-C₁₂ alkyl group, aryl group, aralkyl group or cycloalkyl group;
- R₁, R₂, R₃, R₅ are equal to an H, alkyl, cycloalkyl, aryl of heterocyclic group; and
- R₁, R₂, and R₅ or R₁, R₂, and R₃ may together form a heterocyclic group.

4. Process according to any one of claims 1 - 3, wherein the solvent is water.

5. Process according to claim 3, wherein the molar amino group/hemiacetal ratio is between 3 and 1.

6. Encapsulated material comprising a core material and a wall material, **characterized in that** the wall material comprises a resin prepared from a compound according to formula (I) of claim 1.

7. Encapsulated material according to claim 6, wherein the compound according to formula (I) is an amino compound according to formula (V) wherein a heterocyclic aminotriazine group is formed by R₁, R₂ and R₅, and wherein R₃ is H and R₄ is methyl or ethyl.

8. Encapsulated material according to claim 7, wherein the aminotriazine ring is derived from melamine.

9. Encapsulated material according to any one of claims 6 - 8, wherein the core material comprises an aromatising agent, a flavouring agent or a colorant.

10. Encapsulated material according to any one of claims 6 - 8, wherein the core material comprises a food supplement.

11. Encapsulated material according to any one of claims 6 - 8, wherein the core material comprises a fertilizer, a herbicide or a pesticide.

12. Encapsulated material according to any one of claims 6 - 8, wherein the core material comprises a medicament.

13. Encapsulated material according to any one of claims 6 - 8, wherein the core material comprises a bleaching agent or a textile treatment agent.

## Patentansprüche

1. Verfahren zum Bilden von Kapseln, umfassend die folgenden Schritte:
(1) Bilden einer Lösung einer Aminoverbindung (I) in einem Lösungsmittel;
(2) Bilden einer Dispersion eines Kernmaterials in der Lösung;
(3) Abscheiden der Aminoverbindung als ein Harz auf der Oberfläche des Kernmaterials zur Bildung von Kapseln; und
(4) Gegebenenfalls Härten und/oder Gewinnen der Kapseln,
worin die Schritte (1) und (2) in beliebiger Reihenfolge oder gleichzeitig ausgeführt werden, und worin die Aminoverbindung (I) die folgende Formel besitzt: 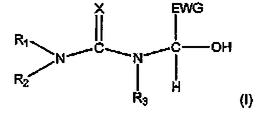 worin:
- X O oder NR₅ ist;
- EWG eine Elektronen-abziehende Gruppe ist;
- R₁, R₂, R₃, R₅ einem(r) H, Alkyl-, Cycloalkyl-, Aryl- oder heterocyclischen Gruppe entsprechen; und
- R₁, R₂ und R₅ oder R₁, R₂ und R₃ miteinander eine heterocyclische Gruppe bilden können.

2. Verfahren gemäß Anspruch 1, worin EWG eine Säure-, Ester-, Cyano-, Di-alkylacetal-, Aldehyd-, substituierte Phenyl- oder Trihalogenmethylgruppe ist.

3. Verfahren gemäß Anspruch 1, worin im Schritt (1) eine Lösung einer Verbindung (V) aus einer Aminoverbindung/Alkanolhemiacetal-Mischung in einem Lösungsmittel gebildet wird, wobei die Verbindung (V) eine Aminoverbindung gemäß folgender Formel ist: 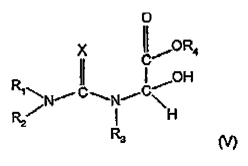 worin;
- X O oder NR₅ entspricht;
- R₄ einer C₁-C₁₂-Alkylgruppe, Arylgruppe, Aralkylgruppe oder Cycloalkylgruppe entspricht;
- R₁, R₂, R₃, R₅ einem (r) H, Alkyl- Cycloalkyl-, Aryl- oder heterocyclischen Gruppe entsprechen; und
- R₁, R₂ und R₅ oder R₁, R₂ und R₃ miteinander eine heterocyclische Gruppe bilden können.

4. Verfahren gemäß einem der Ansprüche 1 - 3, worin das Lösungsmittel Wasser ist.

5. Verfahren gemäß Anspruch 3, worin das molare Aminogruppe/Hemiacetal-Verhältnis zwischen 3 und 1 liegt.

6. Vergekapseltes Material, umfassend ein Kernmaterial und ein Wandmaterial, **dadurch gekennzeichnet, dass** das Wandmaterial ein Harz umfasst, das aus einer Verbindung gemäß der Formel (I) von Anspruch 1 hergestellt wird.

7. Vergekapseltes Material gemäß Anspruch 6, worin die Verbindung gemäß Formel (I) eine Aminoverbindung gemäß Formel (V) ist, worin eine heterocyclische Aminotriazingruppe durch R₁, R₂ und R₅ gebildet wird, und worin R₃ H ist und R₄ Methyl oder Ethyl ist.

8. Vergekapseltes Material gemäß Anspruch 7, worin der Aminotriazinring von Melamin abgeleitet ist.

9. Vergekapseltes Material gemäß einem der Ansprüche 6 - 8, wobei das Kernmaterial ein Aromatisierungsmittel, ein Geschmacksmittel oder ein Färbemittel enthält.

10. Vergekapseltes Material gemäß einem der Ansprüche 6 - 8, wobei das Kernmaterial ein Nahrungsergänzungsmittel enthält.

11. Vergekapseltes Material gemäß einem der Ansprüche 6 - 8, wobei das Kernmaterial ein Düngemittel, ein Herbizid oder ein Pestizid enthält.

12. Vergekapseltes Material gemäß einem der Ansprüche 6 - 8, wobei das Kernmaterial ein Medikament enthält.

13. Vergekapseltes Material gemäß einem der Ansprüche 6 - 8, wobei das Kernmaterial ein Bleichmittel oder ein Textil-Behandlungsmittel enthält.

## Revendications

1. Procédé pour former des capsules comprenant les étapes :
(1) de formation d'une solution d'un composé amino (I) dans un solvant ;
(2) de formation d'une dispersion d'un matériau formant un noyau dans la solution ;
(3) de dépôt du composé amino sous forme d'une résine sur la surface du matériau formant le noyau pour former des capsules ; et
(4) éventuellement de durcissement et/ou de recouvrement des capsules,
où les étapes (1) et (2) sont exécutées dans un ordre quelconque ou simultanément, et où le composé amino (I) présente la formule suivante 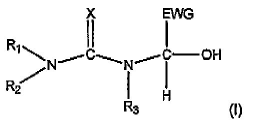 où
- X représente O ou NR₅ ;
- EWG est un groupe attracteur d'électrons ;
- R₁, R₂, R₃, R₅ représentent H, un groupe alkyle, cycloalkyle, aryle ou hétérocyclique ; et
- R₁, R₂ et R₅ ou R₁, R₂ et R₃ peuvent former ensemble un groupe hétérocyclique.

2. Procédé selon la revendication 1, où EWG est un groupe acide, ester, cyano, dialkylacétal, aldéhyde, phényle substitué ou trihalogénométhyle.

3. Procédé selon la revendication 1, où, dans l'étape (1), on forme une solution d'un composé (V) à partir d'un mélange composé amino/hémiacétal d'alcanol dans un solvant, où le composé (V) est un composé amino selon la formule suivante : 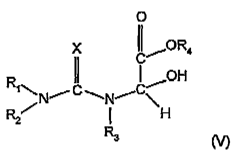 où
- X représente O ou NR₅ ;
- R₄ représente un groupe C₁-C₁₂-alkyle, un groupe aryle, aralkyle ou cycloalkyle ;
- R₁, R₂, R₃, R₅ représentent H, un groupe alkyle, cycloalkyle, aryle ou hétérocyclique et
- R₁, R₂ et R₅ ou R₁, R₂ et R₃ peuvent former ensemble un groupe hétérocyclique.

4. Procédé selon l'une quelconque des revendications 1-3, dans lequel le solvant est l'eau.

5. Procédé selon la revendication 3, dans lequel le rapport molaire groupe amino/hémiacétal est compris entre 3 et 1.

6. Matériau encapsulé comprenant un matériau formant un noyau et un matériau formant une paroi, **caractérisé en ce que** le matériau formant la paroi comprend une résine préparée à partir d'un composé selon la formule (I) de la revendication 1.

7. Matériau encapsulé selon la revendication 6, où le composé selon la formule (I) est un composé amino selon la formule (V) où un groupe aminotriazine hétérocyclique est formé par R₁, R₂ et R₅, et où R₃ représente H et R₄ représente méthyle ou éthyle.

8. Matériau encapsulé selon la revendication 7, où le cycle aminotriazine est dérivé de la mélamine.

9. Matériau encapsulé selon l'une quelconque des revendications 6-8, où le matériau formant le noyau comprend un arôme, un parfum ou un colorant.

10. Matériau encapsulé selon l'une quelconque des revendications 6-8, où le matériau formant le noyau comprend un supplément alimentaire.

11. Matériau encapsulé selon l'une quelconque des revendications 6-8, où le matériau formant le noyau comprend un engrais, un herbicide ou un pesticide.

12. Matériau encapsulé selon l'une quelconque des revendications 6-8, où le matériau formant le noyau comprend un médicament.

13. Matériau encapsulé selon l'une quelconque des revendications 6-8, où le matériau formant le noyau comprend un agent de blanchiment ou un agent de traitement de textile.
